# EUROPÄISCHE PATENTANMELDUNG

(11) **EP 1 398 945 A1**
(43) Veröffentlichungstag der Anmeldung: **17.03.2004**
(21) Anmeldenummer: 02020333.7
(22) Anmeldetag: 11.09.2002
(51) Int. Cl.: H04M 7/00, H04Q 3/00, H04M 3/493, H04M 3/56

(54) **Websitegesteuerter Aufbau von Telefonverbindung**

(71) Anmelder: Web. De AG, 76227 Karlsruhe (DE)
(72) Erfinder: Greve, Michael, 76135 Karlsruhe (DE)
(74) Vertreter: Schnekenbühl, Robert Matthias L.

(57) **Zusammenfassung**

Die Erfindung betrifft ein Verfahren zum Telefonieren, bei dem eine Telefonverbindung zwischen wenigstens zwei Telefonen unter Steuerung einer Website aufgebaut wird. Um die gewünschte Telefonverbindung mittels seiner Telekommunikations-Website zu realisieren, kontaktiert der Anrufer seine Telekommunikations-Website. Dies erfolgt, in dem der Anrufer einen auf einem von ihm benutzten Rechnersystem ausgeführter Browser zur Eingabe einer seine Telekommunikations-Website eindeutig identifizierenden Kennung oder Adresse nutzt (z.B. URL). Über die Website können auch Telefonkonferenzen aufgebaut werden.

## Beschreibung

### Gebiet der Erfindung

Im Allgemeinen betrifft die vorliegende Erfindung unter Verwendung von Telefonen durchgeführte Kommunikation. Insbesondere betrifft die vorliegende Erfindung das Telefonieren zwischen wenigstens zwei Telefonen, wobei hier verwendete Telefonverbindungen nicht unmittelbar von einem Telefon, sondern unter Steuerung einer Website aufgebaut werden.

### Hintergrund der Erfindung

Um unter Verwendung von Telefonen über ein Telefonnetz zu kommunizieren, werden gewünschte Telefonverbindungen ausgehend von einem zum Anrufen verwendeten Telefon zu einem anzurufenden Telefon aufgebaut. Hierfür wird üblicherweise mittels des anrufenden Telefons eine Telefonnummer des anzurufenden Telefons an eine zum Aufbau von Telefonverbindungen verwendete Einrichtung eines Telefonnetzwerks übermittelt. Dabei wird von dem anrufenden Telefon zu der Vermittlungseinrichtung eine Telefonverbindung aufgebaut. Auf der Grundlage der von dem anrufenden Telefon erhaltenen Informationen, beispielsweise in Form einer Telefonnummer eines anzurufenden Telefons, stellt dann die Vermittlungseinrichtung eine Telefonverbindung zu dem anzurufenden Telefon her und verbindet diese Telefonverbindungen oder leitet die von dem anrufenden Telefon ausgehende Telefonverbindung zu der Vermittlungseinrichtung zu dem anzurufenden Telefon weiter.

Diese Vorgehensweise hat mehrere Nachteile. Zum Einen sind herkömmliche Telefone nur eingeschränkt in der Lage einen Benutzer beim Aufbau einer Telefonverbindung mit Informationen über anzurufende Telefone bzw. anzurufende Personen zu versorgen. Es gibt Telefone, die deren Benutzern gespeicherte Telefonnummern zur Verfügung stellen. Derartige Informationen über anzurufende Personen bzw. Telefone sind verglichen mit den Informationen, die über anzurufende Personen bzw. Telefone verfügbar sind, von geringem Inhalt. Des Weiteren ist die Bedienungsfreundlichkeit herkömmlicher Telefone in erster Linie darauf ausgelegt, eine Telefonverbindung zwischen zwei Telefonen herzustellen. Der Aufbau einer Konferenzschaltung oder einer weiteren Telefonverbindung einer schon bestehenden Telefonverbindung erfordert oftmals komplexe Bedienungsvorgänge für den Benutzer eines Telefons.

Darüber hinaus ist es für eine Person, die eine andere Person anrufen möchte, nicht möglich, anzugeben, von welchem seiner Telefone ausgehend eine Telefonverbindung zu der anderen Person ausgebaut werden soll. Viel mehr hat sich ein Anrufer schon im Vorfeld zu entscheiden, welches seiner Telefone er benutzen möchte.

### Aufgabe der Erfindung

Aufgabe der vorliegenden Erfindung ist es, die beim herkömmlichen Telefonieren in erster Linie auf die vorhandenen Telefone zurückzuführenden Einschränkungen zu beseitigen. Insbesondere soll es die vorliegende Erfindung ermöglichen, Telefonverbindungen zwischen Telefonen aufzubauen, ohne dass dabei ein Anrufer, der eine Telefonverbindung von einem Telefon zu einem anderem Telefon aufbauen möchte, durch die technischen Eigenschaften seines Telefons, insbesondere hinsichtlich dessen Bedienungsfreundlichkeit, eingeschränkt wird. Dabei soll es die vorliegende Erfindung erlauben, dass die hinsichtlich des Aufbaus von Telefonverbindungen angestrebten Vorteile für beliebige, herkömmliche, nicht modifizierte Telefone realisiert werden können.

### Kurzbeschreibung der Erfindung

Der der vorliegenden Erfindung zugrunde liegende Ansatz zur Lösung der obigen Aufgabe besteht darin, eine gewünschte Telefonverbindung unter Steuerung einer Webpage aufzubauen. Insbesondere sieht die vorliegende Erfindung vor, dass zum Aufbau einer Telefonverbindung von einem Telefon zu wenigstens einem anderen Telefon eine Website, die der die gewünschte Telefonverbindung anfordernden Person zugeordnet ist, verwendet wird. Im Gegensatz zum Stand der Technik wird daher beim Aufbau einer erfindungsgemäßen Telefonverbindung nicht das Telefon der die gewünschte Telefonverbindung einleitenden Person, die im Folgenden auch als Anrufer bezeichnet wird, benutzt. Vielmehr verwendet der Anrufer seine Website dazu, um das Telefon oder die anzurufende Person zu definieren, wodurch die Eingabe einer Telefonnummer in ein Telefon vermieden wird, wie sie herkömmlicherweise erforderlich ist. Auf Grund der Eigenschaften einer Website, nahezu unbeschränkt Informationen und interaktive Bedienungsmöglichkeiten bereitzustellen, kann die Bedienungsfreundlichkeit und Benutzerunterstütung beim Aufbau von Telefonverbindungen verbessert werden.

Im Speziellen stellt die vorliegende Erfindung ein Verfahren zum Telefonieren bereit, bei dem eine Telefonverbindung zwischen wenigstens zwei Telefonen unter der Steuerung einer Website aufgebaut wird.

Der Begriff "Website", wie er hier benutzt wird, bezeichnet Sites und diesen zugeordnete Untersites, die auf eindeutige Weise mittels einer einzelnen Adresse, beispielsweise einer Telefonnummer, einer IP-Adresse, einer URL und der gleichen, adressiert werden können.

Insbesondere bezeichnet der Begriff "Website" eine vom Internet her bekannte Website mit einer speziellen URL, die über diese mittels geeigneter Datenübertragungen und - verbindungen mittels des Internets verwendet werden können.

Des Weiteren kann eine Website im Sinne dieser Erfindung eine oder mehrere Webpages umfassen. Webpages stellen einen Teil einer Website dar.

Vorzugsweise wird bei dem erfindungsgemäßen Verfahren eine Telekommunikations-Website verwendet. Eine Telekommunikations-Website unterscheidet sich von herkömmlichen Internet-Websites dadurch, dass sie in Antwort auf einen Zugriff durch einen Endbenutzer eine unmittelbare private Kommunikation für den zugreifenden Endbenutzer bereitstellt.

Eine Telekommunikations-Website ist einer speziellen Person zugeordnet, für diese personalisiert oder entspricht dieser. In diesem Zusammenhang wird der Begriff "Person" stellvertretend für jede Partei verwendet, die mit einer Website kommunizieren kann. Beispiele hierfür sind neben natürlichen Personen, Unternehmen, einzelne Einheiten, beispielsweise in Form von technischen Anordnungen oder Systemen und in Form von Softwareanwendungen, spezielle Adressen, spezielle geographische Stellen, spezielle Endbenutzergeräte und dergleichen. Als Endbenutzergeräte sind bei dieser Erfindung Endbenutzergeräte vorgesehen, die über ein Datennetzwerk insbesondere über das Internet, auf eine Website zugreifen können. Beispiele hierfür umfassen rechnergestützte Systeme, Personal Computer, tragbare und mobile Rechnereinheiten, WAP-fähige Ein- und Vorrichtungen und dergleichen.

Ein weiteres Merkmal einer erfindungsgemäßen Website, insbesondere einer erfindungsgemäßen Kommunikations-Website, besteht darin, dass diese im Gegensatz zu einer vom Internet her bekannten Website nicht auf ein Übertragungsmedium beschränkt ist. Vielmehr erlaubt eine erfindungsgemäße Website eine sogenannte multimediale Kommunikation, und d.h. es können beispielsweise das Internet, Telefonnetzwerke, IP-basierte Netzwerke, GSM-Netzwerke, UMTS-Netzwerke und dergleichen verwendet werden. Dies ermöglicht, dass mittels einer erfindungsgemäßen Website Telefonverbindungen zwischen Telefonen aufgebaut werden können.

Vorzugsweise wird beim erfindungsgemäßen Aufbau einer Telefonverbindung eine Telefonverbindung über ein herkömmliches Telefonnetzwerk hergestellt, wobei einzelne oder mehrere zum Aufbau einer gewünschten Telefonverbindung erforderliche Telefonverbindungen unter Steuerung der Website hergestellt werden.

Dabei ist es vorgesehen, dass der Anrufer seiner Website Daten bereitstellt, die die Person oder das Telefon charakterisieren, zu dem der Anrufer eine Telefonverbindung wünscht. Im Gegensatz zum Stand der Technik ist hierfür die Verwendung eines Telefons nicht erforderlich.

Auf der Grundlage der von dem Anrufer bereitgestellten Informationen hinsichtlich einer anzurufenden Person bzw. eines anzurufenden Telefons kann die Website zuerst eine Telefonverbindung zu einem Telefon des Anrufers herstellen. Die ermöglicht es, dass der Anrufer nicht schon bei der Definition einer anzurufenden Person oder eines anzurufenden Telefons entscheiden muss, welches seiner Telefone verwendet werden soll.

Vielmehr erlaubt die Verwendung der Website dem Anrufer im Wesentlichen unabhängig von dem Zeitpunkt, an dem er die anzurufende Person oder das anzurufende Telefon charakterisierende Informationen bereitstellt, mittels welchen Telefons er telefonieren möchte. Des Weiteren erlaubt es die Verwendung der Website, dass der Anrufer mittels seiner Website neben einer schon bestehenden Telefonverbindung eine weitere Telefonverbindung aufbauen kann, wobei er in seiner Wahl, zu welchen seiner Telefone die weitere Telefonverbindung aufgebaut werden soll, nicht eingeschränkt ist.

Nach dem Aufbau einer Telefonverbindung zu einem seiner Telefone, die der Anrufer vorzugsweise durch entsprechende, der Website bereitgestellte Informationen definiert hat, kann die Website eine Telefonverbindung zu dem von dem Anrufer definierten Telefon oder zu der von dem Anrufer definierten Person aufbauen. Vorzugsweise wird diese Telefonverbindung erst dann aufgebaut, wenn der Anrufer das von ihm angegebene Telefon so bedient hat oder betreibt, dass der Website angegeben wird, dass der Anrufer tatsächlich die gewünschte Telefonverbindung aufbauen möchte. Dies kann beispielsweise dadurch erfolgen, dass der Anrufer in Antwort auf die von der Website zu seinem Telefon aufgebaute Telefonverbindung dieses Telefon zum Telefonieren aktiviert, d.h. beispielsweise den Telefonhörer abhebt.

Alternativ ist es möglich, dass die Website zuerst eine Telefonverbindung zu der von dem Anrufer gewünschten Person oder zu dem von dem Anrufer gewünschten Telefon aufbaut und erst dann für eine Telefonverbindung zu einem von dem Anrufer angegebenen Telefon herstellt, wenn die gewünschte Person bzw. das gewünschte Telefon tatsächlich erreichbar ist, d.h. die dorthin aufgebaute Telefonverbindung zustandegekommen ist. Auch hier bleibt es dem Anrufer frei, zu definieren, welches seiner Telefone verwendet werden soll.

Unabhängig davon, in welcher Weise die Website Telefonverbindungen aufbaut, werden diese, wenn sie tatsächlich vorhanden sind, so miteinander verbunden, dass der Anrufer mit der anzurufenden Person bzw. dem anzurufenden Telefon auf herkömmliche Weise telefonieren kann. Alternativ zu einer Verbindung von Telefonverbindungen kann die Website auch eine zuerst aufgebaute Telefonverbindung weiterleiten, d.h. entweder die zu dem verwendenden Telefon des Anrufers aufgebaute Telefonverbindung zu der anzurufenden Person bzw. zu dem anzurufenden Telefon oder die Telefonverbindung zu dem anzurufenden Telefon bzw. zu dem anzurufenden Telefon zu dem zu verwendenden Telefon des Anrufers weiterleiten.

Des Weiteren ist es vorgesehen, dass mittels der Website aufgebaute Telefonverbindungen gesteuert werden können. Insbesondere soll es die Website ermöglichen, dass in Antwort auf eine entsprechende Eingabe seitens des Anrufers eine aufgebaute Telefonverbindung gehalten und/oder stumm geschaltet wird.

Dies ermöglicht es unter Verwendung der Website neben einer bestehenden Telefonverbindung eine weitere Telefonverbindung zu einem anderen anzurufenden Telefon oder zu einer anderen anzurufenden Person aufzubauen, ohne dabei die bestehende Telefonverbindung beenden zu müssen.

Auch ist es möglich, unter Verwendung der Website und mittels Steuerung durch diese eine Telefonkonferenzschaltung mit wenigstens zwei anzurufenden Personen bzw. zwei anzurufenden Telefonen aufzubauen.

Dabei ist es vorgesehen, dass auch bei einer vorhandenen Konferenzschaltung neben dieser eine oder mehrere weitere Telefonverbindungen aufgebaut werden können, die nicht Teil der Konferenzschaltung werden.

Vorzugsweise ist die Website so ausgeführt, dass die einzelnen Zustände bzw. Schritte beim Aufbau von Telefonverbindungen dem Anrufer angegeben werden. Hierbei können beispielsweise unterschiedliche Webpages, Fenster, Textwiedergaben, Farbgestaltung, Sprachausgaben, Audioausgaben und dergleichen verwendet werden, die die Interaktivität bei Benutzung der Website unterstützen können.

So stellt die vorliegende Erfindung ein Verfahren zum Telefonieren bereit, bei dem einer Website von einem Anrufer Informationen bereitgestellt werden, die ein anzurufendes erstes Telefon charakterisieren. Anhand dieser Informationen wird dann unter Steuerung der Website eine erste Telefonverbindung zu dem anzurufenden ersten Telefon aufgebaut.

Vorzugsweise wird unter Steuerung der Website die erste Telefonverbindung zwischen dem anzurufenden ersten Telefon und zu einem von dem Anrufer angegebenen ersten Telefon aufgebaut.

Dabei ist es vorgesehen, dass Informationen, die das erste Telefon des Anrufers charakterisieren, durch den Anrufer der Website bereitgestellt werden.

Zum Aufbau der ersten Telefonverbindung ist es möglich, dass die Website zuerst eine Telefonverbindung zu dem ersten Telefon des Anrufers und dann eine Telefonverbindung zu dem anzurufenden ersten Telefon aufbaut. Um die erste Telefonverbindung zu realisieren, werden unter Steuerung der Website diese Telefonverbindungen dann verbunden.

Vorteilhafterweise wird in diesem Fall die Telefonverbindung zu dem anzurufenden ersten Telefon erst dann aufgebaut, wenn der Anrufer, beispielsweise durch Abheben des Telefonhörers seines angegebenen ersten Telefons, angibt, dass er die erste Telefonverbindung tatsächlich wünscht.

Alternativ ist es möglich, dass die Website zuerst eine Telefonverbindung zu dem anzurufenden ersten Telefon aufbaut und dann eine damit zu verbindende Telefonverbindung zu dem ersten Telefon des Anrufers herstellt.

Hierbei ist es vorgesehen, dass die Telefonverbindung zu dem ersten Telefon des Anrufers erst dann aufgebaut wird, wenn die zu dem anzurufenden ersten Telefon vorgesehene Telefonverbindung tatsächlich aufgebaut werden konnte.

Des Weiteren ist es möglich, unter Steuerung der Website eine zweite Telefonverbindung zu einem anzurufenden zweiten Telefon aufzubauen, wobei von dem Anrufer das anzurufende zweite Telefon charakterisierte Informationen der Website bereitgestellt werden.

Hierbei ist es möglich, die zweite Telefonverbindung zwischen dem anzurufenden zweiten Telefon entweder zu dem ersten Telefon des Anrufers oder zu einem anderen von dem Anrufer angegebenen zweiten Telefon unter Steuerung der Website aufzubauen. Auch hier ist es möglich, dass der Anrufer die Informationen, die das zweite Telefon des Anrufers charakterisieren, der Website bereitstellt.

Der Aufbau der zweiten Telefonverbindung kann, wie oben unter Bezugnahme auf die erste Telefonverbindung ausgeführt, zuerst zu dem ersten Telefon oder dem zweiten Telefon des Anrufers und dann zu dem anzurufenden zweiten Telefon oder zuerst zu diesem und dann zu dem ersten oder zweiten Telefon des Anrufers aufgebaut werden.

Die hinsichtlich der zweiten Telefonverbindung gemachten Ausführungen gelten entsprechend für eine dritte und jede weitere Telefonverbindung zu anzurufenden Dritten und anzurufenden weiteren Telefonen sowie zu dritten und weiteren Telefonen des Anrufers.

Unter Steuerung der Website aufgebaute Telefonverbindungen können nebeneinander aufrechterhalten werden, wobei Benutzer angerufener Telefone nur mit dem Anrufer kommunizieren können. Wird hierbei lediglich ein Telefon des Anrufers verwendet, können Telefonverbindungen zu angerufenen Telefonen, die aktuell nicht zur Kommunikation verwendet werden, stumm geschaltet oder gehalten werden. Bei Verwendung von zwei oder mehr Telefonen des Anrufers ist es möglich, dass der Anrufer parallel mit mehreren anzurufenden Telefonen kommuniziert.

Des Weiteren ist es möglich, dass unter Steuerung der Website nacheinander oder gleichzeitig aufgebaute Telefonverbindungen in eine Konferenzschaltung integriert oder zu einer solchen zusammengefasst werden können, wobei die an der Konferenzschaltung beteiligten anzurufenden Telefone gleichzeitig mit dem Anrufer kommunizieren können. Hierbei ist es vorgesehen, dass in einer Konferenzschaltung zusammengefasste Telefonverbindungen neben davon getrennten Telefonverbindungen aufgebaut bzw. aufrechterhalten werden können. Dies ermöglicht es, dass der Anrufer einmal in einer Konferenzschaltung und davon getrennt mittels wenigstens einer anderen Telefonverbindung kommuniziert.

Vorzugsweise zeigt die Website dem Anrufer die zum Aufbau und beim Aufbau von Telefonverbindungen auftretenden Betriebszustände sowohl der Website selbst als auch hinsichtlich unter Steuerung der Website aufzubauender und/oder aufrechtzuerhaltender Telefonverbindungen an. Dies kann mittels graphischer Darstellungen (Webpages, Fenster, Menüs, Icons, Bedienfelder, Bedienflächen, Buttons) und dergleichen, akustisch (z. B. Sprachausgaben, Audioausgaben) und dergleichen erfolgen.

Um seitens des Anrufers der Website Informationen der oben genannten Art bereitzustellen, kann es erforderlich sein, dass der Anrufer auf die Website zugreift. Aus Sicherheitsgründen kann es dabei erforderlich sein, dass der Anrufer identifizierende Daten, beispielsweise in Form von Passwörtern, ID-Codes und dergleichen, bereitstellt.

Des Weiteren ist es vorgesehen, dass der Aufbau und/oder die Aufrechterhaltung und/oder Beendigung einer unter Steuerung der Website aufgebauten Telefonverbindung mittels der Website in Antwort von dem Anrufer bereitgestellten Informationen folgt. Hierbei ist es möglich, dass der Anrufer der Website Informationen bereitstellt, die dieser angeben, dass eine Telefonverbindung aufzubauen ist, dass eine Telefonverbindung stumm zu schalten ist, dass eine Telefonverbindung in eine Konferenzschaltung zu integrieren ist, dass eine Telefonverbindung aus einer Konferenzschaltung zu entfernen ist oder dass eine Telefonverbindung zu beenden ist.

Vorzugsweise verwendet der Anrufer zum Bereitstellen von Informationen und/oder zum Zugreifen auf die Website ein Endbenutzergerät, das kein Telefon des Anrufers ist. Insbesondere ist es hierbei vorgesehen, dass der Anrufer ein computerbasiertes System, beispielsweise einen Personal Computer und dergleichen, verwendet.

Bei einer besonders bevorzugten Ausführungsform des erfindungsgemäßen Verfahrens wird eine Telekommunikations-Website als Website verwendet.

### Kurzbeschreibung der Figuren

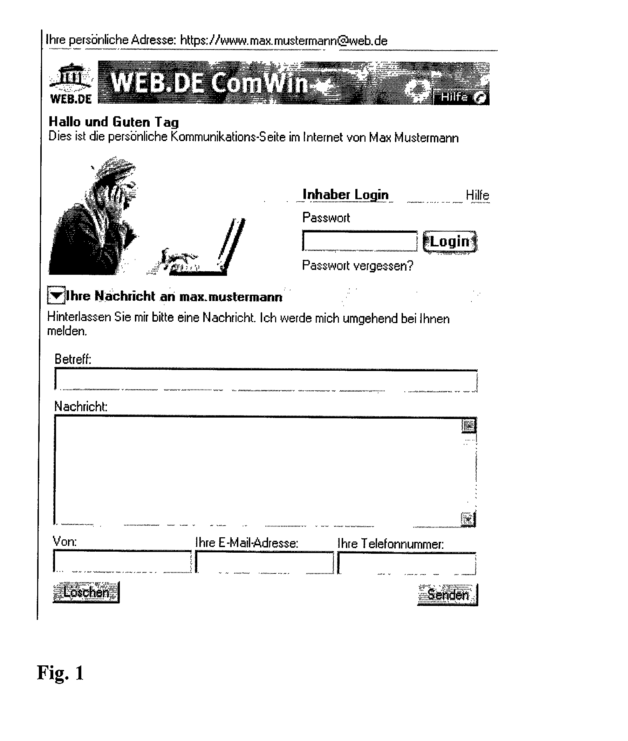

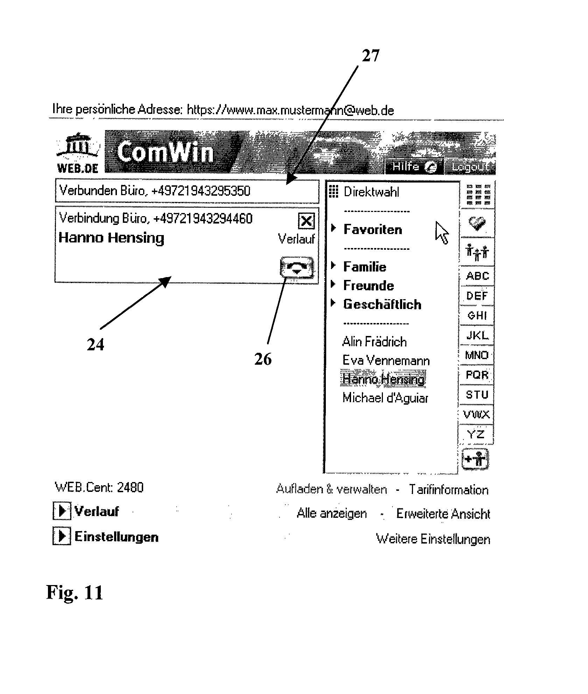

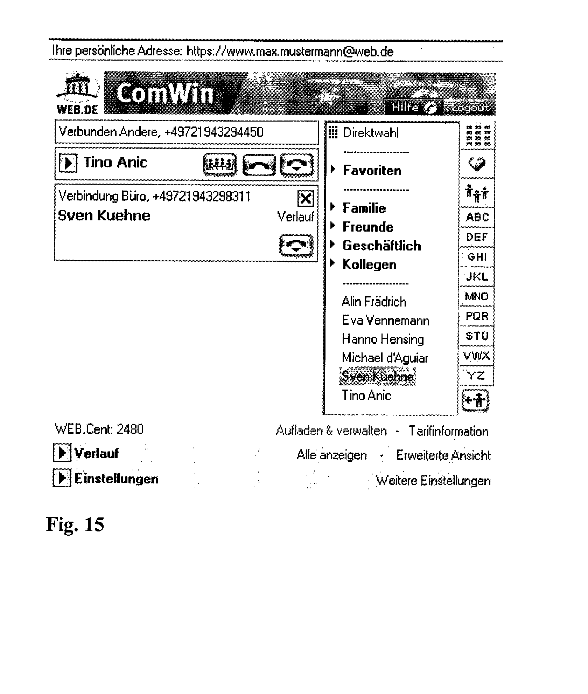

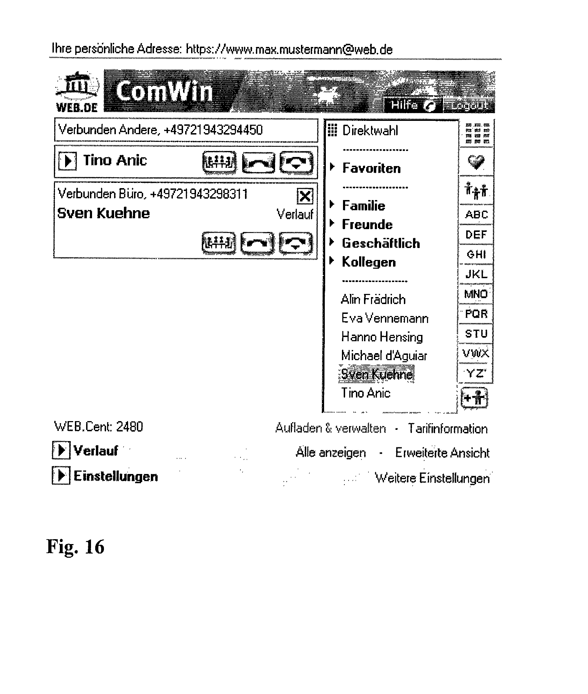

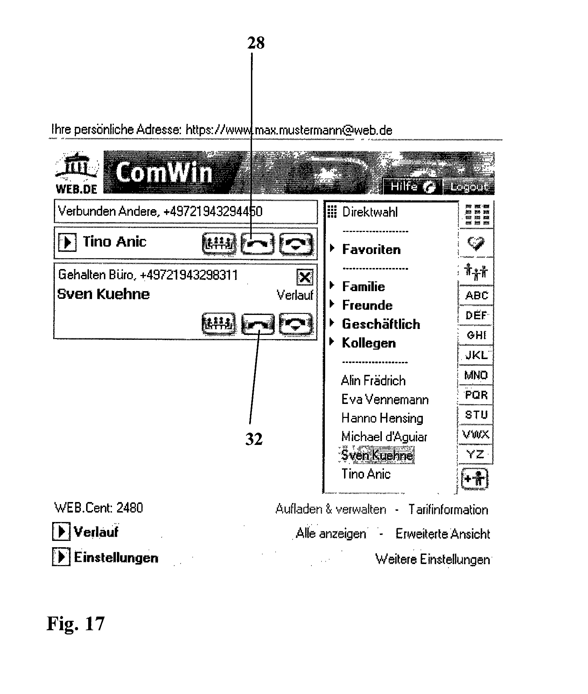

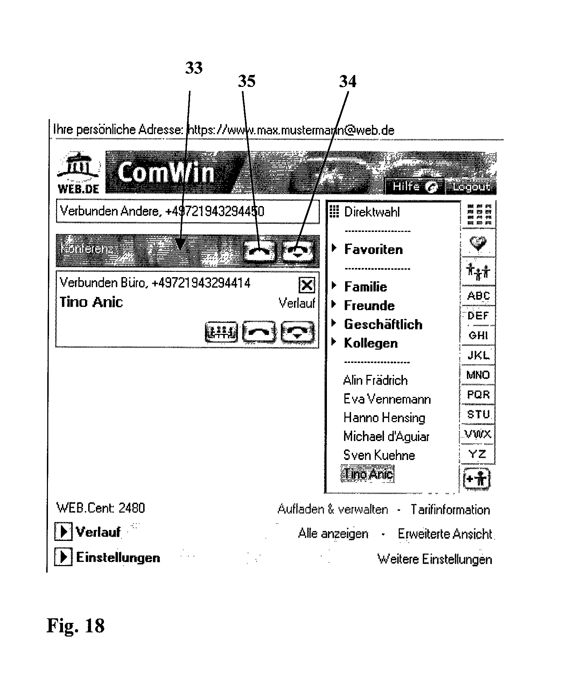

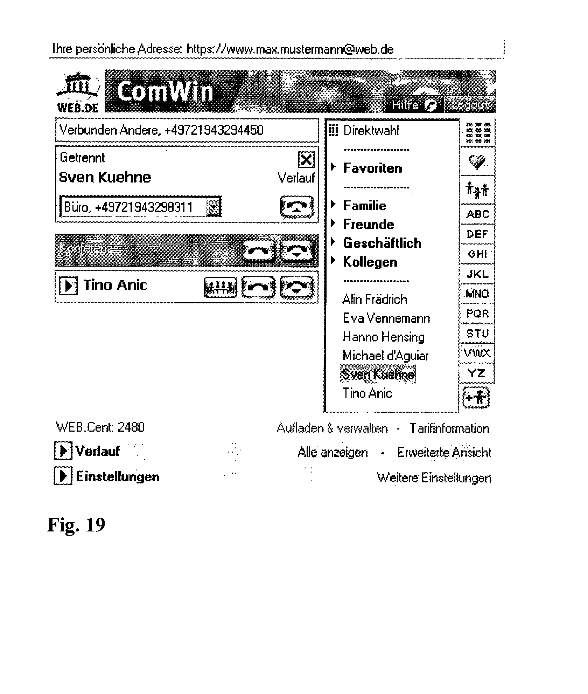

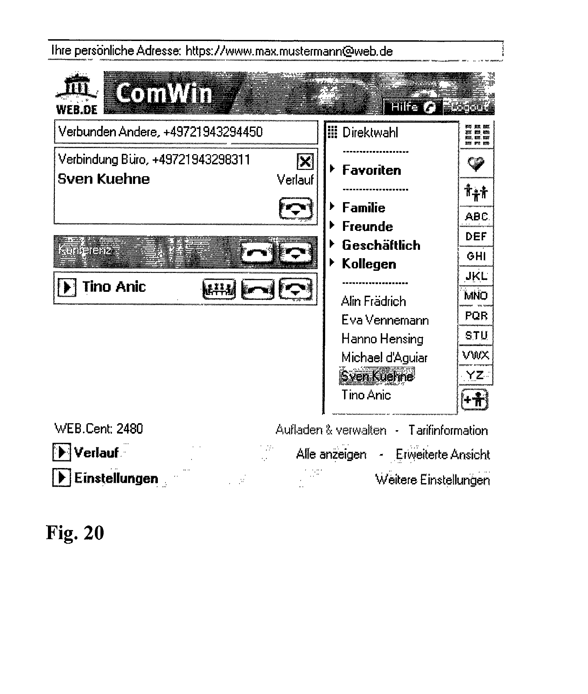

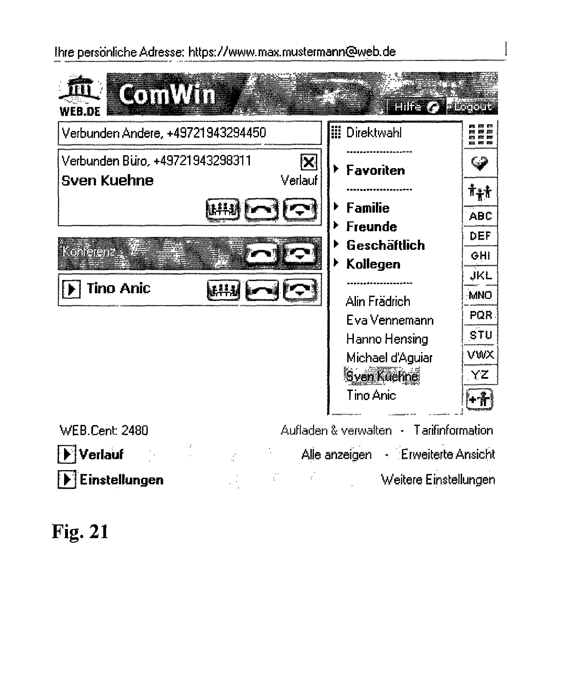

In der folgenden Beschreibung bevorzugter Ausführungsformen wird auf die beigefügten Figuren 1 bis 23 Bezug genommen, die erfindungsgemäße Webpages einer erfindungsgemäßen Website veranschaulichen.

### Beschreibung bevorzugter Ausführungsformen

Die folgende Beschreibung basiert auf einem Szenario, bei dem ein Benutzer eines Telefons, die als Anrufer bzw. als anrufendes Telefon bezeichnet werden, eine Telefonverbindung mit einem anderen Benutzer eines anderen Telefons, die im Folgenden als Angerufener bzw. angerufenes Telefon bezeichnet werden, unter Verwendung seiner, d.h. des Anrufers, Telekommunikations-Website aufbauen möchte.

Um die gewünschte Telefonverbindung mittels seiner Telekommunikations-Website zu realisieren, kontaktiert der Anrufer seine Telekommunikations-Website. Dies erfolgt, indem der Anrufer einen auf einem von ihn benutzten Rechnersystem (z.B. Personal Computer) ausgeführten Browser (Softwareapplikation zur internetbasierten Kommunikation) zur Eingabe einer seine Telekommunikations-Website eindeutig identifizierenden Kennung oder Adresse, beispielsweise in Form einer URL, nutzt.

Dies bewirkt, dass der Anrufer zu einer in Fig. 1 dargestellten Webpage seiner Telekommunikations-Website gelangt. Diese Webpage ist wie alle anderen Webpages der Telekommunikations-Website des Anrufers für diesen personalisiert. Die Personalisierung wird in diesem Fall durch den in dieser Webpage an geeigneten Stellen eingefügten Namen ("Max Mustermann") des Anrufers angegeben. Weitere Möglichkeiten eine Webpage der Telekommunikations-Website des Anrufers zu personalisieren besteht in einer Aufnahme von dem Benutzer eindeutig zugeordneten bzw. diesen in eindeutiger Weise charakterisierenden Daten, beispielsweise in Form von Initialen, Telefonnummern, E-Mail-Adressen und dergleichen. Im Gegensatz zu anderen Webpages der Telekommunkations-Website des Anrufers ist die in Fig. 1 gezeigte Webpage, die auch als Startseite bezeichnet werden kann, öffentlich zugänglich. D.h., jede Person kann unter Kenntnis der Adresse bzw. Kennung dieser Telekommunikations-Website auf diese Webpage gelangen.

Wie im Folgenden erläutert, ist ein weiterer Zugriff auf andere Webpages der Telekommunikations-Website des Anrufers für andere Personen nicht möglich. Allerdings kann eine sich von dem Anrufer unterscheidende Person die Webpage "Startseite" dazu verwenden, dem Anrufer als "Besitzer" dieser Telekommunikations-Website eine Nachricht zukommen zu lassen.

Hierfür sind die in Fig. 1 im unteren Bereich dargestellten Bereiche/Fenster vorgesehen. Mittels dieser ist es möglich, dem Besitzer dieser Telekommunikations-Website, d.h. dem Anrufer, eine Nachricht, beispielsweise in Form einer E-Mail oder einer SMS, zukommen zu lassen.

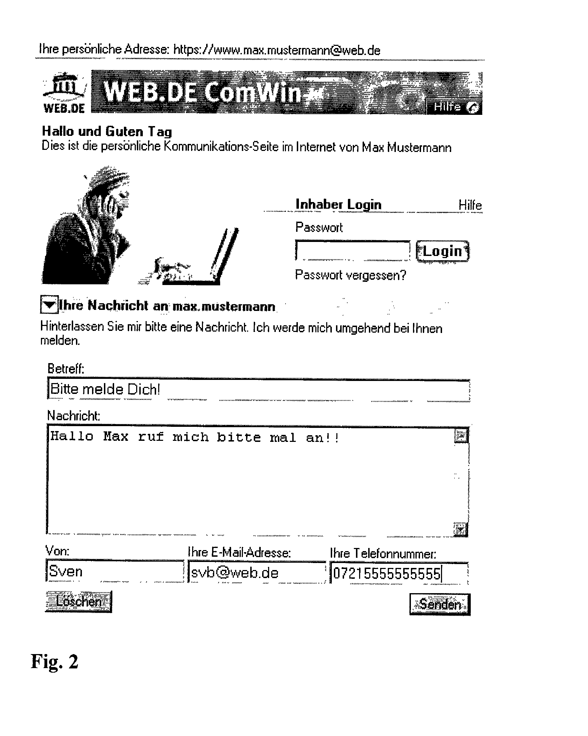

In Fig. 2 ist die Webpage nach Nutzung der genannten Bereiche/Fenster dargestellt. In dem in Fig. 2 mit der Bezeichnung "Nachricht:" versehenen Textfeld ist ein als E-Mail zu versendender Text eingegeben. In dem in Fig. 2 mit der Bezeichnung "von:" versehenen Textfeld hat die Person, die diesen Kommunkationsweg nutzt, ihren Namen, ihre Initialen oder sonstige kennzeichnende Angaben eingeben. Um es dem Besitzer der Telekommunikations-Website zu ermöglichen, eine Nachricht in Form einer E-Mail und/oder mittels eines Telefonanrufs zurück zu übermitteln, kann in das mit der Bezeichnung "Ihre E-Mail-Adresse:" versehenen Textfeld eine zum Erhalt einer Antwort gewünschten E-Mail-Adresse bzw. in das mit der Bezeichnung "Ihre Telefonnummer:" versehene Textfeld eine für einen Rückruf erwünschte Telefonnummer eingegeben werden. Eine Betätigung des Schaltfeldes "Senden" bewirkt eine Übertragung der E-Mail.

Darüber hinaus ist es für Personen, die nicht mit dem Anrufer als Inhaber der die in Fig. 1 dargestellten Webpage umfassenden Telekommunikations-Website übereinstimmen, nicht möglich, diese Telekommunikations-Website zu nutzen, d.h. auf andere als die in Fig. 1 dargestellte Webpage zu gelangen.

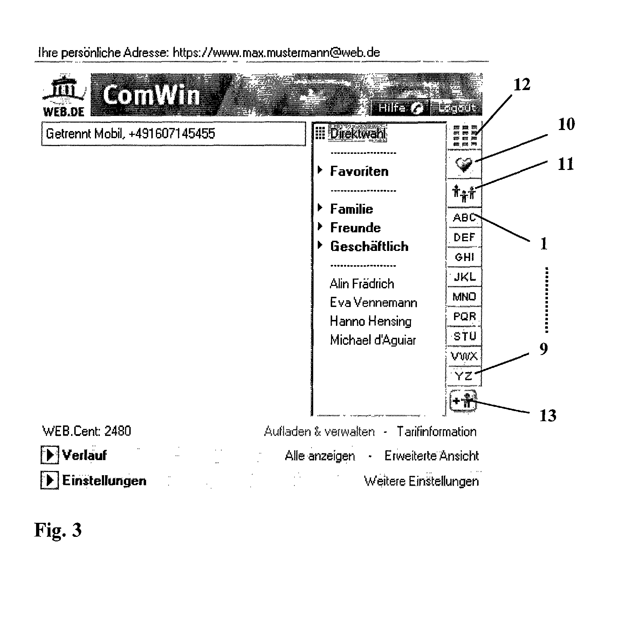

Zur weiteren Nutzung der Telekommunikations-Website ist es erforderlich, in das in Fig. 1 mit der Bezeichnung "Passwort" bezeichnete Textfeld ein Passwort, einen Code, einen Schlüssel oder Vergleichbares einzugeben. Zur Erhöhung der Sicherheit ist es ferner vorgesehen, dass zur Identifikation der Telekommunikations-Website weitere Daten, beispielsweise in Form von biometrischen Daten (z.B. Sprache, Fingerabdrücke, Augenhintergrundabdrücke und dergleichen) bereitgestellt werden müssen. Um den Besitzer der Telekommunkations-Website, d.h. hier dem Anrufer, zu unterstützen, ist dessen Name ("Max Mustermann") bereits in der Webpage eingetragen. Wird das Passwort korrekt eingegeben, kann auf weitere Seiten der Telekommunikations-Website zugegriffen bzw. diese genutzt werden. Hierfür wird nach Eingabe eines Passworts die Schaltfläche "Login" aktiviert. Ist dieser als "Anmelden" bezeichnete Vorgang erfolgreich abgeschlossen, d.h. sind sowohl Benutzername als auch Passwort korrekt, gelangt der Anrufer auf die in Fig. 3 dargestellte Webpage.

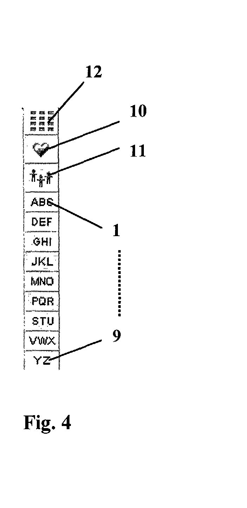

Die in Fig. 3 dargestellte Webpage erlaubt dem Anrufer verschiedene interaktive Vorgänge durchzuführen bzw. einzuleiten. Mittels der in Fig. 3 rechts und in Fig. 4 einzeln, vergrößert dargestellten Menüleiste sind verschiedene Schaltflächen bereitgestellt. Diese Schaltflächen dienen insgesamt zur Verwaltung und Nutzung von Adresseinträgen des Anrufers. Unter Adresseinträgen sind hierbei solche Daten und/oder Informationen zu verstehen, die unter Verwendung der Telekommunikations-Website erreichbare Personen, Telefonanschlüsse, Rechnereinheiten bzw. -systeme und dergleichen charakterisieren.

Solche Adresseinträge sind alphabetisch sortiert, wobei mittels Aktivierung der Schaltflächen 1,...,9 ("abc",...,"yz") auf diese zugegriffen werden kann. Des weiteren ist es möglich, Adresseinträge einer als "Favoriten" bezeichneten Gruppe zuzuordnen, in der häufig genutzte Adresseinträge zusammengefasst sind. Mittels Aktivierung des Schaltfeldes 10 gelangt der Anrufer dann unmittelbar zu Adresseinträgen der Gruppe "Favoriten". Adresseinträge können auch nach anderen Kriterien, wie z.B. Familie, Freunde, Geschäftskontakte, Kollegen und dergleichen gruppiert sein. Zugriffe auf so gruppierte Adresseinträge erfolgen durch Betätigung des Schaltfeldes 11.

Um es dem Anrufer zu ermöglichen, auch mit Personen telefonieren zu können, für die kein Adresseintrag vorhanden ist, ist das Schaltfeld 12 vorgesehen. Eine Wahl dieses Schaltfeldes leitet den Anrufer auf eine hier nicht dargestellte Webpage weiter, wo er eine anzurufende Telefonnummer direkt eingeben kann.

Um einen neuen Adresseintrag aufzunehmen, betätigt der Anrufer das in Fig. 3 und 4 mit 13 bezeichnete Schaltfeld.

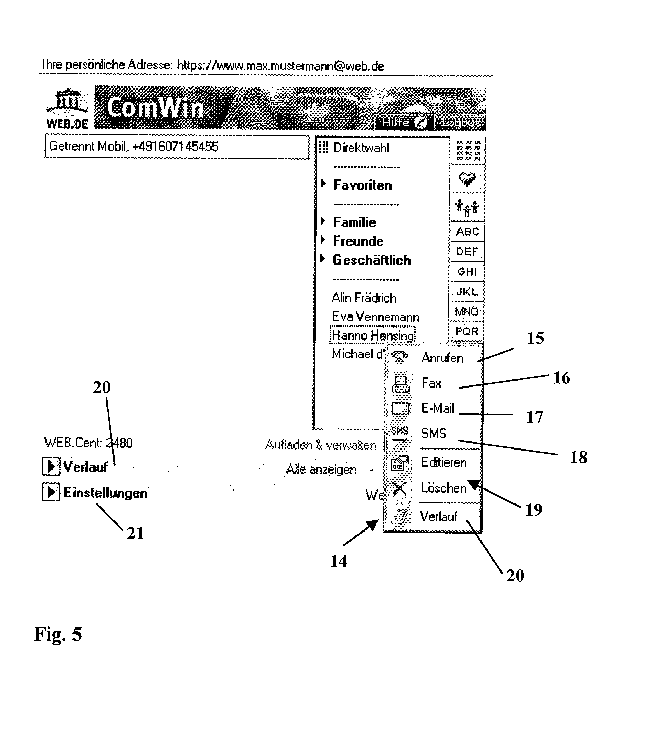

Um vorhandene Adresseinträge zu ändern und zu nutzen, wählt der Anrufer, wie in Fig. 5 durch den grau hinterlegten Namen ("Hanno Hensing") angedeutet, einen gewünschten Adresseintrag aus. Ein so ausgewählter Adresseintrag kann dann wie ein Schaltfeld verwendet werden. Hier ist es vorgesehen, dass die Nutzung eines ausgewählten Adresseintrages als Schaltfeld durch Betätigung der rechten Taste einer Maus mit zwei Tasten möglich ist (linke Maustaste bei einer von einem Linkshänder verwendeten Maus). Die Verwendung eines ausgewählten Adresseintrages vergleichbar zu einem Schaltfeld kann auch auf andere Weise bewirkt werden, beispielsweise durch eine vorgegebene Tastenkombination auf der Tastatur eines von dem Anrufer verwendeten Computers.

Hat der Anrufer den gewählten Adresseintrag ausgewählt und ihn vergleichbar zu einem Schaltfeld aktiviert, wird ihm das in Fig. 5 mit dem Bezugszeichen 14 bezeichnete Fenster angezeigt. In diesem Fenster 14 sind weitere Schaltfelder vorgesehen, die es dem Anrufer ermöglichen, die in dem gewählten Adresseintrag zugeordnete Person anzurufen oder dieser eine Fax-, E-Mail- oder SMS-Nachricht zukommen zu lassen. Diese Schaltfelder sind in Fig. 5 mit den Bezugszeichen 15, ..., 18 bezeichnet.

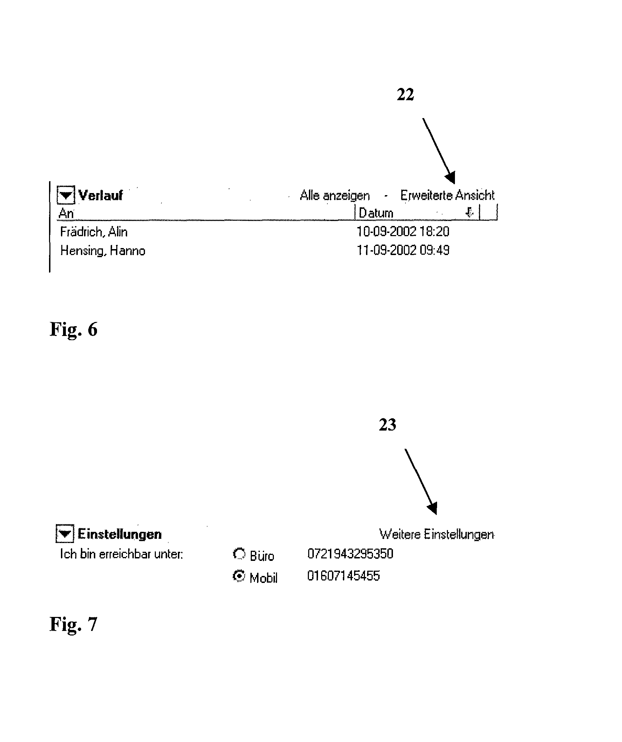

Mittels des Schaltfeldes "Editieren" in dem mit 19 bezeichneten Bereich kann der Anrufer den gewählten Adresseintrag verändern (editieren), während das Schaltfeld "Löschen" bewirkt, dass der gewählte Adresseintrag aus den Adresseinträgen des Anrufers entfernt wird. Wählt der Anrufer das Schaltfeld 20 "Verlauf" aus, wird ihm, wie in Fig. 6 dargestellt, eine Ansicht darüber bereitgestellt, in welcher Weise er mit der dem gewählten Adresseintrag zugeordneten Person wann kommuniziert hat. Bei dem in Fig. 6 dargestellten Beispiel sind lediglich Telefonverbindungen zu der Person des gewählten Adresseintrages aufgeführt. Alternativ ist es vorgesehen, dass diese mit dem Begriff "Verlauf" bezeichnete Aufstellung andere Kommunikationsarten auch in Kombination miteinander und auch in Kombination mit erfolgten Telefonanrufen darstellt.

Die Darstellung des Verlaufs von Kommunikationsverbindungen mit der dem gewählten Adresseintrag zugeordneten Person kann in Form eines Fensters der in Fig. 5 dargestellten Webpage oder in einer, hier nicht dargestellten, eigenen Webpage erfolgen. Bei dem dargestellten Beispiel wird die Darstellung "Verlauf" in eine in die Webpage von Fig. 5 integrierten Fenster dargestellt. Durch Betätigung des in Fig. 6 mit 22 bezeichneten Schaltfeldes "Erweiterte Ansicht" wird dem Anrufer eine Aufstellung erfolgter Kommunikationen bezüglich des gewählten Adresseintrages in einer neuen Webpage bereitgestellt.

Wählt der Anrufer das in Fig. 5 mit 21 bezeichnete Schaltfeld "Einstellungen" aus, gelangt er zu der in Fig. 7 gezeigten Darstellung. Diese Darstellung gibt an, unter welcher Telefonnummer der Anrufer derzeit, aktuell erreichbar ist. Des Weiteren ist es in dieser in einem Fenster der in Fig. 5 dargestellten Webpage vorgesehenen Fenster oder in einer eigenen Webpage dargestellten Darstellung möglich, die eingestellte Telefonnummer zu ändern. Bei dem dargestellten Beispiel kann der Anrufer zwischen seiner privaten Telefonnummer ("Zuhause") und seiner geschäftlichen Telefonnummer ("Büro") wählen.

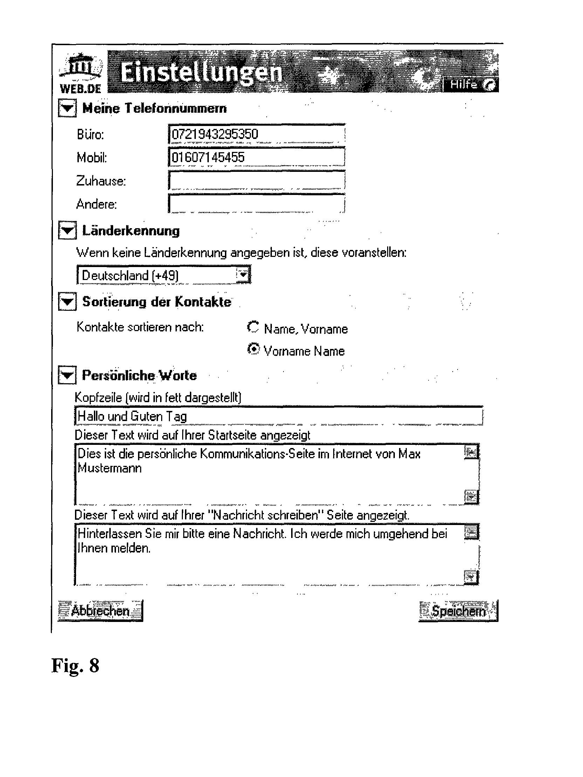

Betätigt der Anrufer das in Fig. 7 mit 23 bezeichnete Schaltfeld "Weitere Einstellungen" gelangt er zu der in Fig. 8 dargestellten Webpage. Wie dort zu sehen, ist es dem Anrufer mittels dieser Webpage möglich, seine persönliche Einstellungen seiner Telekommunikations-Website hinsichtlich einer Verwendung für Telefonverbindungen vorzunehmen bzw. zu ändern. Wie Eingangs ausgeführt, stellt die hier beschriebene Telekommunikations-Website eine spezielle, als "WEB.DE ComWin" (private Telefonvermittlung) bezeichnete Kommunikations-Website dar. Alternativ kann deren Funktion als private Telefonvermittlung auch von einer dem Anrufer zugeordneten Telekommunikations-Website bereitgestellt, die zusätzlich andere Funktionen bereitstellt. In diesem Fall würde die hier beschriebene Telekommunikations-Website eine Unter-Website oder eine Gruppe von Webpages einer solchen für mehrere Funktionen vorgesehenen Telekommunikations-Website darstellen.

Die Telekommunikations-Website, wie sie hier beschrieben ist, dient als Telefonvermittlung ("ComWin"), um eine Telefonverbindung zwischen einem gemäß den Einstellungen (siehe Fig. 7 und 8) vorgegebenen Telefon des Anrufers und einem anderen, unter Verwendung von Adresseinträgen (siehe Fig. 5) ausgewählten Telefon einer Person ("Angerufener") herzustellen, mit der der Anrufer telefonieren möchte. Ein grundsätzlicher Unterschied zu einer herkömmlich aufgebauten Telefonverbindung, d.h. in Antwort auf die Eingabe einer Telefonnummer in ein Telefon, benutzt hier der Anrufer sein Telefon zur Eingabe einer gewünschten Zieltelefonnummer nicht.

Auch der Aufbau einer gewünschten Telefonverbindung unterscheidet sich hier von dem Aufbau einer herkömmlichen Telefonverbindung. Hat der Anrufer die Telefonnummer der anzurufenden Person gewählt, wird unter Steuerung der Telekommunikations-Website des Anrufers zunächst eine Telefonverbindung zu der in den Einstellungen definierten Telefonnummer des Anrufers hergestellt. Erst wenn der Anrufer die gewünschte Telefonverbindung zu der anzurufenden Person tatsächlich aufbauen möchte, wird unter Steuerung der Telekommunikations-Website eine Telefonverbindung zu dem Telefon der anzurufenden Person aufgebaut. Dass der Anrufer die gewünschte Telefonverbindung tatsächlich realisieren möchte, kann die Telekommunikations-Website beispielsweise daran erkennen, dass der Anrufer in Antwort auf den Aufbau einer Telefonverbindung zu seinem Telefon den Hörer desselben abnimmt oder auf eine andere Weise angibt, dass er den Anruf annehmen möchte. Hierbei ist es möglich, die mittels der Telekommunikations-Website hergestellte Telefonverbindung zum Telefon des Anrufers vergleichbar zu einem herkömmlichen Telefonanruf anzuzeigen, indem beispielsweise das Telefon des Anrufers klingelt.

Zum Aufbau dieser Telefonverbindungen ist es vorgesehen, dass die Telekommunikations-Website zwei zunächst getrennte Telefonverbindungen aufbaut, nämlich eine zu dem Telefon des Anrufers und eine zu dem Telefon des Angerufenen, die dann miteinander verbunden werden. Alternativ ist es möglich, dass die Telekommunikations-Webiste zunächst die Telefonverbindung zu dem Telefon des Anrufers aufbaut und diese dann, wenn von dem Anrufer tatsächlich gewünscht, zu dem Telefon des Angerufenen weiterleitet.

Um anzugeben, welche Person angerufen werden soll, kann der Anrufer auf unterschiedliche Weise vorgehen. Der Anrufer kann nach Aktivierung des Schaltfeldes 12 (siehe Fig. 3) eine gewünschte Telefonnummer manuell eingeben. Des weiteren kann der Anrufer, wie unter Bezugnahme auf Fig. 5 ausgeführt, durch Betätigung des Schaltfeldes 15 eine einem gewählten Adresseintrag zugeordnete Telefonnummer auswählen. Eine schnellere Methode, eine einem Adresseintrag zugeordnete Telefonnummer auszuwählen besteht darin, einen dargestellten Adresseintrag vergleichbar zu einem Schaltfeld zu aktivieren. Dies kann beispielsweise durch eine als "Doppelklick" bezeichnete Betätigung einer Maus erfolgen.

Im Folgenden wird der weitere Ablauf am Beispiel einer Auswahl einer Telefonnummer für einen vorhandenen Adresseintrag erläutert. Diese Ausführungen gelten in entsprechender Weise für eine durch manuelle Eingabe angegebene Telefonnummer, wobei aufgrund eines fehlenden zugeordneten Adresseintrags mittels desselben verfügbare Informationen dem Anrufer nicht bereitgestellt werden, sofern einzelne oder mehrere solcher Informationen, die eine anzurufende Telefonnummer bzw. eine dieser zugeordneten Person betreffen, auf andere Weise bereitgestellt werden können (z.B. beispielsweise durch Zugriff auf eine Datenbank seitens der Telekommunikations-Website in Abhängigkeit einer manuell eingegebenen Telefonnummer).

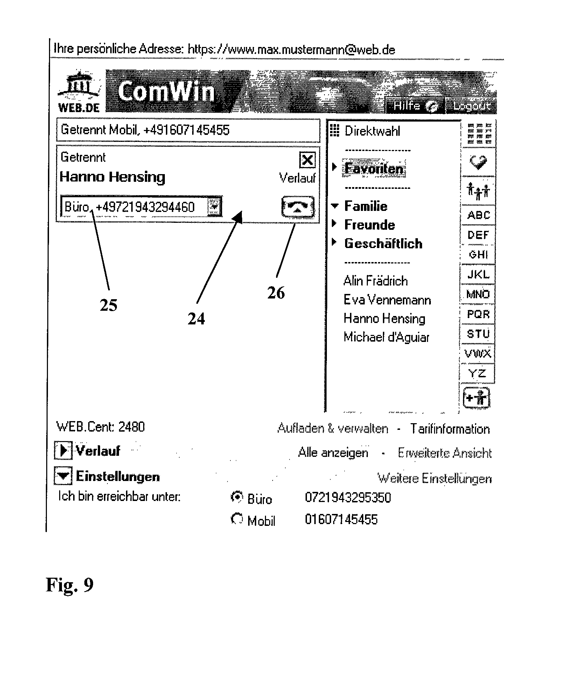

Hat der Anrufer unter Verwendung eines Adresseintrages eine anzurufende Telefonnummer ausgewählt, wird ihm die in Fig. 9 dargestellte Webpage angezeigt. In dieser Webpage ist es dem Anrufer noch möglich, die Telefonnummer zu ändern unter der eine Telefonverbindung aufgebaut werden soll (siehe Fig. 9 unten). Die Darstellungen von Fig. 5 und 9 unterscheiden sich im Wesentlichen durch das in Fig. 9 dargestellte "Kontakt"-Fenster 24. Dementsprechend ist es möglich, das anstelle einer eigenen Webpage die in Fig. 5 dargestellte Webpage verwendet und durch das Kontaktfenster 24 ergänzt wird.

In dem Kontaktfenster ist der Name der anzurufenden Person sowie die Telefonnummer angegeben, zu der eine Telefonverbindung hergestellt werden soll. Bei dem dargestellten Beispiel hat der Anrufer angegeben, dass er eine Telefonverbindung zum Büro ("Office") der anzurufenden Person ("Hanno Hensing") herstellen möchte. Die anzurufende Telefonnummer kann durch Betätigung des Schaltfeldes 25 geändert werden.

Des Weiteren wird in dem Fenster 24 der aktuelle Zustand hinsichtlich einer Telefonverbindung mit dem Angerufenen angegeben. Die graphische Gestaltung einer Schaltfläche 26 in Fig. 9 ("Unaufgelegter Telefonhörer") zeigt an, dass zur Zeit keine Telefonverbindung aufgebaut. Der nach oben gerichtete Pfeil des Schaltfeldes 26 gibt dem Anrufer an, dass eine Betätigung des Schaltfeldes 26 bewirkt, dass eine Telefonverbindung zu der gewünschten Person aufgebaut wird. Zur Unterstützung der durch das Schaltfeld 26 bereitgestellten Benutzerführung kann das Schaltfeld 26 in geeigneter Weise farblich gestaltet sein, z.B. grün.

Wenn der Benutzer das Schaltfeld 26 aktiviert, beginnt, wie oben ausgeführt, die Telekommunikations-Website eine Telefonverbindung zu der anzurufenden Person aufzubauen.

Hierbei verändert sich das Aussehen des Fenster 24 dahingehend, dass das in Fig. 9 mit 25 bezeichnete Feld nicht mehr dargestellt wird. Aufgrund der Vorgehensweise, zum Aufbau einer Telefonverbindung zu der anzurufenden Person, zunächst den Anrufer anzurufen, ist es vorgesehen, dass sich das Kontaktfenster farblich verändert, beispielsweise eine orange Färbung erhält.

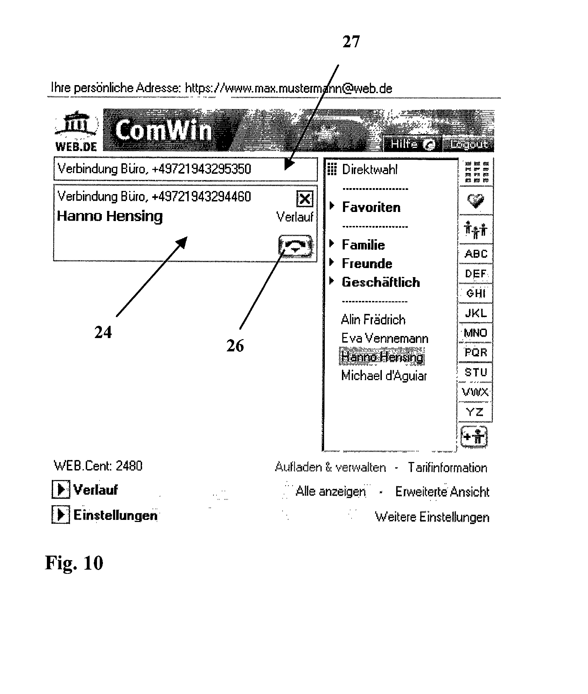

Des Weiteren ist es möglich, einen diesen Zustand mittels eines in Fig. 10 mit 27 bezeichneten "Status"-Fensters anzugeben. In diesem Fenster kann dieser Zustand durch einen geeigneten Text ("Verbunden ..... [Nennung der Telefonnummer des Anrufer-Telefons]") und/oder durch eine geeignete Färbung (vorteilhafterweise in der gleichen Farbe wie das Fenster 24 in diesem Zustand, d.h. beispielsweise orange) verdeutlicht werden.

Des Weiteren hat sich das Aussehen des Schaltfeldes 26 dahingehend geändert, dass es nun einen nach unten gerichteten Pfeil aufweist. Dieser gibt an, dass eine Betätigung des Schaltfeldes 26 eine durch die Telekommunikations-Website eingeleitete Beendigung der Telefonverbindung zu dem angegebenen Telefon des Anrufers einleitet. Dies kann dadurch zusätzlich visuell unterstützt werden, in dem das Schaltfeld 26 geeignet gefärbt ist, z.B. rot. Diese Wirkung einer Betätigung des Schaltfeldes 26 gilt auch im Folgenden, wobei dort in Abhängigkeit des jeweiligen Zustandes hinsichtlich einzelner oder mehrerer Telefonverbindungen die jeweils aufgebaute (n) Telefonverbindung (en) seitens der Telekommunikations-Website beendet werden.

Hat nun der Anrufer den Telefonhörer seines Telefons abgenommen und dadurch der Telekommunikations-Website mitgeteilt, dass er tatsächlich die gewünschte Telefonverbindung realisieren möchte, wird dies dem Anrufer mittels des Statusfensters 27 angegeben. Bei dem dargestellten Beispiel erfolgt dies durch die Darstellung eines entsprechenden Textes ("Verbunden ..... [Nennung der Telefonnummer des Anrufer-Telefons] ") vorteilhafterweise in Verbindung mit einer entsprechenden farblichen Gestaltung des Statusfensters, beispielsweise in grün. Da zu diesem Zeitpunkt noch keine tatsächliche Telefonverbindung mit der anzurufenden Person vorhanden ist, ändert sich die Darstellung des Kontaktfensters nicht, d.h. es bleibt beispielsweise die orange Färbung beibehalten.

In Antwort auf die Angabe des Anrufers, die gewünschte Telefonverbindung tatsächlich aufzubauen, wird nun unter Steuerung der Telekommunikations-Website eine Telefonverbindung zu dem anzurufenden Telefon aufgebaut. Dieser Zustand wird dem Anrufer mittels des Fensters 27 angegeben, beispielsweise mittels einer geeigneten Textdarstellung ("Verbunden ..... [Nennung der Telefonnummer des Anrufer-Telefons]") und/oder einer geeigneten Farbgebung (beispielsweise orange für Zustände in denen Telefonverbindungen seitens der Telekommunikations-Website eingeleitet werden).

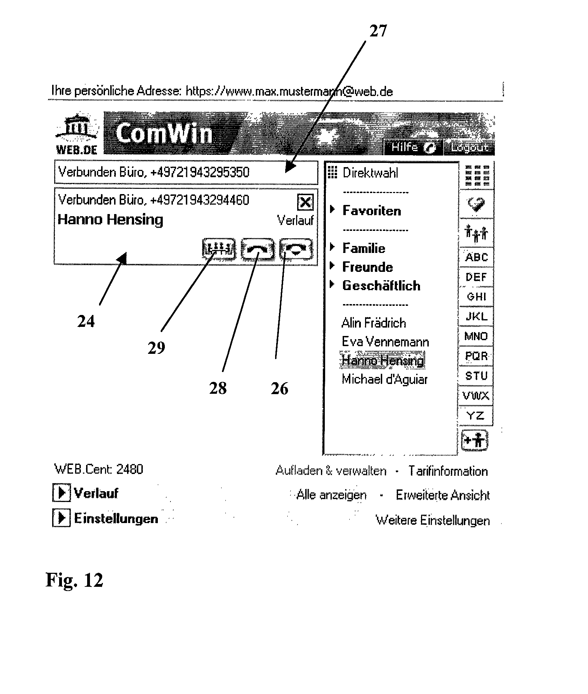

Ist eine Telefonverbindung zwischen dem Telefon des Anrufers und dem Telefon der anzurufenden Person erfolgreich aufgebaut worden, d.h. hat auch der angerufene den Telefonhörer seines Telefons abgenommen, wird dies mittels des Kontaktfensters 24 und des Statusfensters 27 angezeigt. Hierfür kann das Statusfenster 27 einen geeigneten Text ("Verbunden ..... [Nennung der Telefonnummer des Anrufer-Telefons]") wiedergeben und/oder eine geeignete Farbgebung (z.B. grün) aufweisen. Auch das Kontaktfenster 24 kann seine Farbe entsprechend ändern, z.B. grün sein. Des Weiteren erkennt der Anrufer diesen Zustand, d.h. den erfolgreichen Aufbau einer Telefonverbindung zu dem Telefon der anzurufenden Person, an den in den Kontaktfenster 24 hinzugefügten Schaltfeldern 28 und 29. Dies ist in Figur 12 veranschaulicht.

Um die Telefonverbindung mit der anzurufenden Person zu beenden, betätigt der Anrufer das Schaltfeld 26. Um hinsichtlich der vorhandenen Telefonverbindung eine Stummschaltung zu bewirken oder diese Telefonverbindung zu halten, kann der Anrufer das Schaltfeld 28 betätigen. Um zusätzlich zu der vorhandenen Telefonverbindung eine oder mehrere Telefonverbindungen von seinem Telefon ausgehend aufzubauen, ist das in Fig. 12 mit 29 bezeichnete Schaltfeld "Konferenzschaltung" vorgesehen.

Aktiviert der Anrufer das Schaltfeld 28, wird die bisher aufgebaute Telefonverbindung gehalten bzw. stummgeschaltet, damit der Anrufer den Aufbau einer weiteren Telefonverbindung einleiten kann. Hierbei ist es möglich, dass in Antwort auf eine Betätigung des Schaltfeldes 28, das beispielsweise eine blaue Farbe aufweisen kann, den Anrufer über die gehaltene Telefonverbindung mitgeteilt wird, dass der Anrufer die Telefonverbindung aufrecht erhalten möchte. Dies kann beispielsweise durch eine geeignete Sprachwiedergabe ("Bitte Verbindung aufrecht erhalten") und/oder durch Wiedergabe von Musik erreicht werden. Dieser Zustand kann an Stelle einer Betätigung des Schaltfeldes 28 auch dadurch erreicht werden, dass der Anrufer nach Betätigung des Schaltfeldes 12 (siehe Fig. 4) oder unter Verwendung eines Adresseintrags, wie oben unter Bezugnahme auf die bisher anzurufende Person ausgeführt, angibt, dass er mit einer weiteren Person telefonieren möchte.

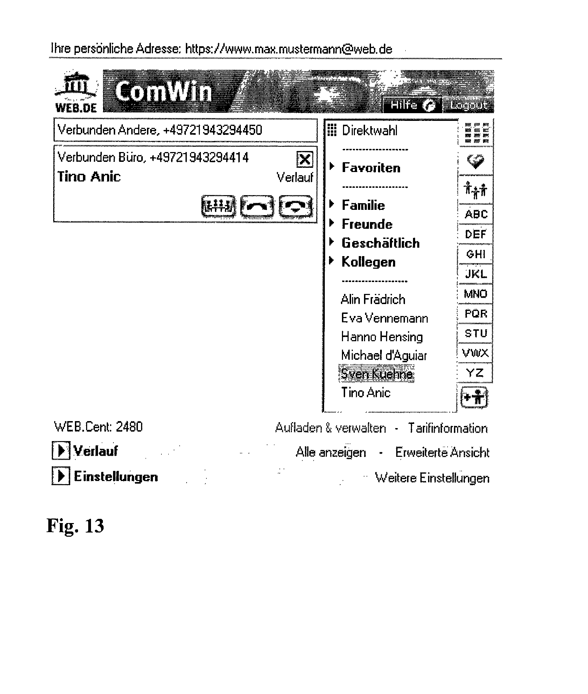

Der Fall, in dem der Anrufer lediglich die bisher aufgebaute Telefonverbindung halten möchte, ist in Fig. 13 dadurch angegeben, dass in den Adresseinträgen der markiert (grau unterlegt) ist, der den Anrufer ("Baumgarten, Sven") bezeichnet. Des Weiteren ist es vorgesehen, dass dieser Zustand durch eine entsprechende, beispielsweise blaue, Färbung des Kontaktfensters angezeigt wird. Auch eine entsprechende Textangabe in dem Fenster 24 (z.B. " Verbunden ..... [Nennung der Telefonnummer des Anrufer-Telefons]", "stumm geschaltet") und/oder in dem Statusfenster 27 ("Verbundene Andere") kann zur visuellen Angabe dieses Zustandes verwendet werden.

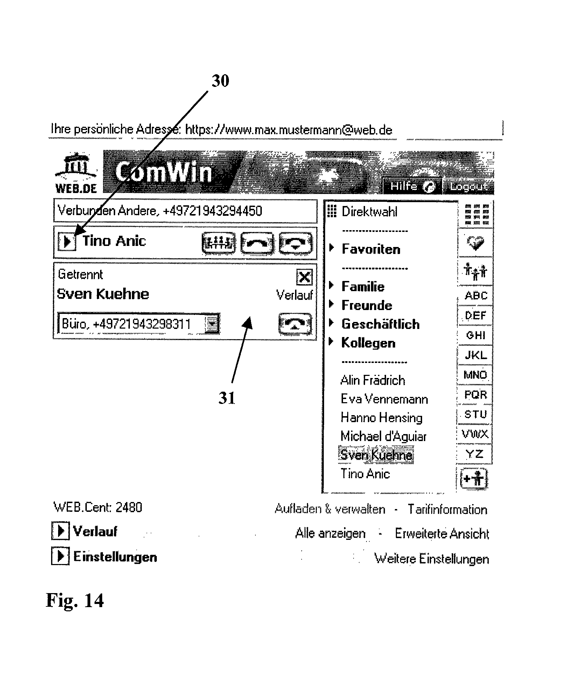

Für den Fall, dass der Anrufer unter Verwendung eines Telefoneintrags eine weitere Telefonverbindung aufbauen möchte, wird dem Anrufer die in Fig. 14 zu sehende Darstellung bereitgestellt. Dabei wird das der ersten angerufenen Person, zu der die Telefonverbindung gehalten wird, zugeordnete Kontaktfenster 24 wie in Fig. 14 dargestellt verändert dargestellt. Hierbei weist das Kontaktfenster 24 ein Schaltfeld 30 auf, dessen Betätigung dazu führt, dass die Telefonverbindung zu der ersten anzurufenden Person nicht mehr stumm gestellt bleibt, sondern auf herkömmliche Weise zum Telefonieren verwendet werden kann. D.h. mittels des Schaltfeldes 30 kann der Anrufer zwischen unterschiedlichen Telefonverbindungen wechseln.

Des Weiteren wird, wie in Fig. 14 dargestellt, ein weiteres Kontaktfenster 31 verwendet, dass der nun anzurufenden Person zugeordnet ist. Der Aufbau einer Telefonverbindung zu einer weiteren anzurufenden Person erfolgt wie oben unter Bezugnahme auf die erste anzurufenden Person beschrieben, wobei die hinsichtlich des Kontaktfensters 24 gemachten Ausführungen entsprechend für das Kontaktfenster 31 gelten. Dies ist in Fig. 13 bis 17 dargestellt.

Um zwischen den zwei nun aufgebauten Telefonverbindungen zu wechseln, kann neben dem oben beschriebenen Schaltfeld 30 das Schaltfeld 28 oder ein dessen Funktion bereitstellendes Schaltfeld 32 verwendet werden.

Für eine Konferenzschaltung, d.h. eine Telefonverbindung gleichzeitig mit mehreren Personen, betätigt der Anrufer das Schaltfeld 29 (siehe Fig. 12). Daraufhin wird ein Fenster 33 dargestellt, in dem ein Schaltfeld 34, vergleichbar zu dem Schaltfeld 26 in der in Fig. 10 dargestellten Ausführung, zur Beendigung einer wie unten beschrieben aufgebauten Konferenzschaltung dient. Ein Schaltfeld 35 in dem Konferenzfenster 33 dient, vergleichbar zu den Schaltfeldern 28 und 32, dazu, eine Stummschaltung oder ein Halten von Telefonverbindungen zu verwirken, hier allerdings hinsichtlich aller an einer Konferenzschaltung beteiligten Telefonverbindungen.

Bei der in Fig. 18 veranschaulichten Situation hat der Anrufer angegeben, dass er eine Konferenzschaltung aufbauen möchte, wobei nur die zu der zuerst angerufenen Person aufgebaute Telefonverbindung besteht. Der Aufbau einer Telefonverbindung zu einem Telefon einer weiteren Person, die an der Konferenzschaltung beteiligt werden soll, erfolgt wie oben beschrieben. Dies ist in Fig. 19 bis 21 veranschaulicht. Die in Fig. 21 dargestellte Webpage gibt den Zustand an, in dem zu einer weiteren Person eine Telefonverbindung aufgebaut ist, aber noch keine Konferenzschaltung besteht.

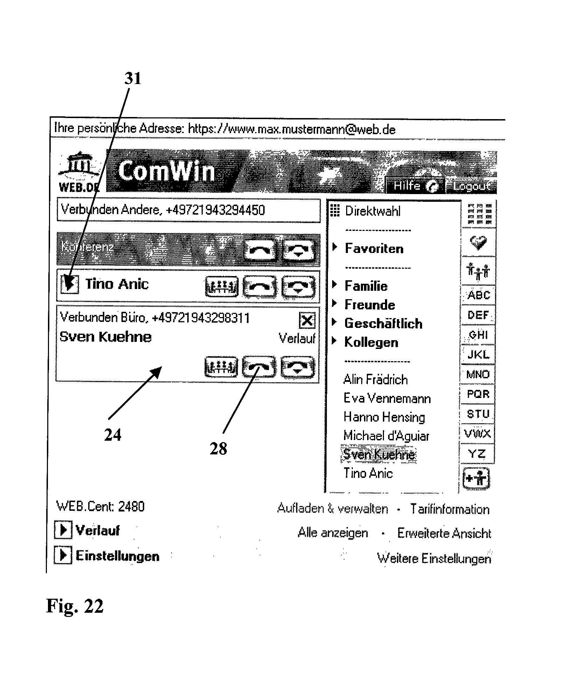

Die eigentliche Konferenzschaltung wird unter Steuerung der Telekommunikation-Webpage dadurch erreicht, dass die bis dahin getrennten Telefonverbindungen zu den zwei anzurufenden Personen miteinander so gekoppelt/verbunden werden, dass sowohl der Anrufer als auch beide angerufenen Personen miteinander telefonieren können. Dieser Zustand wird dem Anrufer auf der in Fig. 22 dargestellten Webpage angegeben, in dem die Kontaktfenster 24 und 31 unterhalb des Konferenzfensters 33 angeordnet sind.

Um im Rahmen einer Konferenzschaltung einen der angerufenen Teilnehmer "Stummzuschalten", betätigt der Anrufer entweder das Schaltfeld 28 oder das Schaltfeld 32. Vorteilhafterweise wird dabei das Kontaktfenster, das dem Gesprächsteilnehmer zugeordnet ist, dessen Telefonverbindung stumm geschaltet ist, farblich verändert, beispielsweise blau, dargestellt.

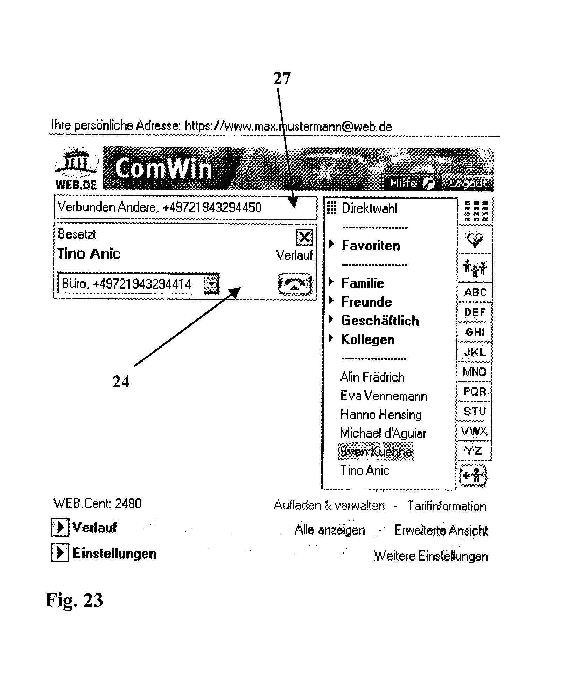

Falls es nicht möglich ist, mittels der Telekommunikation-Website eine Telefonverbindung zu einem gewünschten Gesprächspartner aufzubauen, kann dies, wie in Fig. 23 veranschaulicht, mittels des Kontaktfensters 24 angegeben werden. Dies kann beispielsweise durch Wiedergabe eines geeigneten Textes ("Leitung besetzt") und/oder durch eine geeignete farbige Gestaltung erreicht werden, die sich auch dynamisch ändern kann ("Blinkendes Kontaktfenster"). Auch eine hierfür geeignete Textwiedergabe und/oder Farbgestaltung des Statusfensters 27 ist vorgesehen.

## Patentansprüche

1. Verfahren zum Telefonieren, bei dem
eine Telefonverbindung zwischen wenigstens zwei Telefonen unter Steuerung einer Website aufgebaut wird.

2. Verfahren nach Anspruch 1, bei dem
eine Telekommunikations-Website für die Website verwendet wird.

3. Verfahren nach einem der vorherigen Ansprüche, mit
- Bereitstellen von ein anzurufendes erstes Telefon charakterisierenden Informationen der Website durch einen Anrufer,
- Aufbauen einer ersten Telefonverbindung unter Steuerung der Website zu dem anzurufenden ersten Telefon.

4. Verfahren nach Anspruch 3, mit
Aufbauen der ersten Telefonverbindung zwischen dem anzurufenden ersten Telefon und einem durch den Anrufer angegebenen ersten Telefon unter Steuerung der Website.

5. Verfahren nach Anspruch 4, bei dem
die das erste Telefon des Anrufers charakterisierenden Informationen durch den Anrufer der Website bereitgestellt werden.

6. Verfahren nach einem der Ansprüche 3 bis 5, mit
- Aufbauen einer Telefonverbindung zu dem ersten Telefon des Anrufers unter Steuerung der Website,
- Aufbauen einer Telefonverbindung zu dem anzurufenden ersten Telefon unter Steuerung der Website, und
- Verbinden der Telefonverbindungen zur dem ersten Telefon des Anrufers und zu dem anzurufenden ersten Telefon unter Steuerung der Website.

7. Verfahren nach Anspruch 6, bei dem
die Telefonverbindungen zu dem ersten Telefon des Anrufers und dazu dem anzurufenden ersten Telefon verbunden werden, wenn der Anrufer angibt, dass die erste Telefonverbindung tatsächlich aufzubauen ist.

8. Verfahren nach einem der Ansprüchen 3 bis 5, mit
- Aufbauen einer Telefonverbindung zu dem anzurufenden ersten Telefon unter Steuerung der Website,
- Aufbauen einer Telefonverbindung zu dem ersten Telefon des Anrufers unter Steuerung der Website, und
- Verbinden der Telefonverbindungen zu dem anzurufenden ersten Telefon und dem ersten Telefon des Anrufers unter Steuerung der Website.

9. Verfahren nach Anspruch 8, bei dem
die Telefonverbindungen zu dem ersten Telefon und dem ersten Telefon des Anrufers verbunden werden, wenn die Telefonverbindung zu dem anzurufenden ersten Telefon hergestellt worden ist.

10. Verfahren nach einem der Ansprüche 3 bis 9, mit
- Bereitstellen von ein anzurufendes zweites Telefon charakterisierenden Information der Website durch den Anrufer und
- Aufbauen einer zweiten Telefonverbindung unter Steuerung der Website zu dem anzurufenden zweiten Telefon.

11. Verfahren nach Anspruch 10, mit
Aufbauen der zweiten Telefonverbindung zwischen dem anzurufenden zweiten Telefon zu dem ersten Telefon des Anrufers oder zu einem von dem Anrufer angegebenen zweiten Telefon unter Steuerung der Website.

12. Verfahren nach Anspruch 11, bei dem
das zweite Telefon des Anrufers charakterisierende Informationen durch den Benutzer der Website bereitgestellt werden.

13. Verfahren nach einem der Ansprüche 10 bis 12, bei dem
die erste Telefonverbindung und die zweite Telefonverbindung unter Steuerung der Website getrennt voneinander aufgebaut und/oder aufrechterhalten werden.

14. Verfahren nach einem der Ansprüche 10 bis 13, bei dem
hinsichtlich wenigstens einer der ersten und zweiten Telefonverbindungen unter Steuerung der Website eine Telefonkonferenzschaltung aufgebaut wird.

15. Verfahren nach einem der vorherigen Ansprüche, bei dem
Telefonverbindungen betreffende Informationen durch die Website bereitgestellt werden.

16. Verfahren nach Anspruch 15, bei dem
zum Bereitstellen der Telefonverbindungen betreffende Informationen eine graphische Benutzungsschnittstelle der Website verwendet wird.

17. Verfahren nach einem der vorherigen Ansprüche, bei dem
zum Aufbau von Telefonverbindungen unter Steuerungen der Website der Anrufer auf die Website zugreifen muss.

18. Verfahren nach Anspruch 17, bei dem
der Anrufer zum Zugreifen auf die Website den Anrufer charakterisierende Daten der Website bereitstellen muss.

19. Verfahren nach einem der vorherigen Ansprüche, bei dem
Telefonverbindungen unter Steuerung der Website in Abhängigkeit von durch den Anrufer der Website bereitgestellten Informationen gesteuert werden.

20. Verfahren nach einem der vorherigen Ansprüche, bei dem
zum Aufbau von Telefonverbindungen unter Steuerung der Website auf die Website mittels eines Endbenutzergerätes zugegriffen wird, das kein Telefon des Anrufers ist.

21. Verfahren nach Anspruch 20, bei dem
zum Zugreifen auf die Website ein computerbasiertes Rechnersystem verwendet wird.
